# DEMANDE DE BREVET EUROPEEN

(11) **EP 1 703 731 A1**
(43) Date de publication de la demande: **20.09.2006**
(21) Numéro de dépôt: 05102027.9
(22) Date de dépôt: 15.03.2005
(51) Int. Cl.: H04N 7/16, H04N 7/167

(54) **Méthode d'encryption d'un contenu à accès conditionnel**

(71) Demandeur: Nagravision S.A., 1033 Cheseaux-sur-Lausanne (CH)
(72) Inventeur: STRANSKY, Philippe, 1033, Cheseaux-sur-Lausanne (CH)
(74) Mandataire: Wenger, Joel-Théophile

(57) **Abrégé**

L'invention consiste à transmettre des messages de contrôle ECM contenant un mot de contrôle CW permettant l'accès à ces contenus vidéos ou audio, ces messages étant décryptés dans un module de sécurité. La décryption d'un tel message ne doit pas compromettre la sécurité du système d'accès conditionnel.

Ce but est atteint par une méthode de transmission et traitement d'un message de contrôle (ECM) par un module de sécurité relié à une unité multimédia destinée au traitement d'un contenu audio et/ou vidéo, ce message comprenant au moins un mot de contrôle (CW) permettant d'accéder audit contenu audio et/ou vidéo, et étant encrypté par une clé de transmission (TK), cette méthode comprenant les étapes suivantes:
- décryption par le module de sécurité du message de contrôle (ECM),
- extraction d'un moins un mot de contrôle (CW) du message décrypté,
- application du mot de contrôle (CW) à une table de substitution,
- transmission du mot de contrôle substitué à l'unité multimédia.

## Description

La présente demande concerne le domaine de l'encryption de contenus audio et/ou vidéo, en particulier par des clés changeant périodiquement dénommées mots de contrôle CW.

Cette invention s'applique plus précisément au domaine de la télévision à péage, dans laquelle un contenu est diffusé sous forme chiffrée, le déchiffrement de ce contenu étant autorisé à des conditions déterminées.

De façon bien connue, pour pouvoir visionner un événement de télévision à péage, tel qu'un film, un événement sportif ou un jeu notamment, plusieurs flux sont diffusés à destination d'une unité multimédia, par exemple d'un décodeur. Ces flux sont notamment d'une part le fichier de l'événement sous forme d'un flux de données chiffrées et d'autre part, un flux de messages de contrôle permettant le déchiffrement du flux de données. Le contenu du flux de données est chiffré par des "mots de contrôle" (Control words = cw), renouvelés régulièrement. Le deuxième flux est appelé flux ECM (Entitlement Control Message) et peut être formé de deux manières différentes. Selon une première manière, les mots de contrôle sont chiffrés par une clé, dite clé de transmission TK, qui est généralement propre au système de transmission entre le centre de gestion et un module de sécurité associé au récepteur/décodeur. Le mot de contrôle est obtenu en déchiffrant les messages de contrôle au moyen de la clé de transmission TK.

Selon une deuxième manière, le flux ECM ne contient pas directement les mots de contrôle chiffrés, mais contient des informations permettant de déterminer les mots de contrôle. Cette détermination des mots de contrôle peut se faire par différentes opérations, en particulier par déchiffrement, ce déchiffrement pouvant aboutir directement au mot de contrôle, ce qui correspond à la première manière décrite ci-dessus, mais le déchiffrement pouvant également aboutir à une donnée qui contient le mot de contrôle, celui-ci devant encore être extrait de la donnée. En particulier, la donnée peut contenir le mot de contrôle ainsi qu'une valeur associée au contenu à diffuser, et notamment les conditions d'accès à ce contenu. Une autre opération permettant la détermination du mot de contrôle peut utiliser par exemple une fonction de hachage à sens unique de cette information notamment.

Les opérations de sécurité sont généralement effectuées dans un module de sécurité associé à l'unité multimédia ou au décodeur. Un tel module de sécurité peut être réalisé en particulier selon quatre formes distinctes. L'une d'elles est une carte à microprocesseur, une carte à puce, ou plus généralement un module électronique (ayant une forme de clé, de badge,...). Un tel module est généralement amovible et connectable au décodeur. La forme avec contacts électriques est la plus utilisée, mais n'exclu pas une liaison sans contact par exemple de type ISO 14443.

Une deuxième forme connue est celle d'un boîtier de circuit intégré placé, généralement de façon définitive et inamovible dans le boîtier du décodeur. Une variante est constituée d'un circuit monté sur un socle ou connecteur tel qu'un connecteur de module SIM.

Dans une troisième forme, le module de sécurité est intégré dans un boîtier de circuit intégré ayant également une autre fonction, par exemple dans un module de désembrouillage du décodeur ou le microprocesseur du décodeur.

Dans une quatrième forme de réalisation, le module de sécurité n'est pas réalisé sous forme matérielle, mais sa fonction est mise en oeuvre sous forme uniquement logicielle. Etant donné que dans les quatre cas, bien que le niveau de sécurité diffère, la fonction est identique, on parlera de module de sécurité quelle que soit la manière de réaliser sa fonction ou la forme que peut prendre ce module.

Malgré le sécurisation du message ECM par la clé de transmission TK, il arrive que des personnes mal-intentionnées arrivent à découvrir la clé de transmission et peuvent ainsi accéder au mot de contrôle.

Une fois ce mot de contrôle découvert, l'accès au contenu encrypté est immédiat.

Une première solution a été proposée dans le document W00156287 basée sur l'utilisation de deux mots de contrôle, l'un dit "maître" et encrypté par une première clé (commun à plusieurs services) et l'autre dit "courant" encrypté par la clé de transmission (propre à un service). La combinaison de ces deux mots de contrôle permet d'accéder au contenu.

Bien que cette solution soit satisfaisante sur la plan de la sécurité, elle ne peut pas toujours être implémentée pour des raisons pratiques. De plus, les moyens des personnes malveillantes étant très importants, ils peuvent par attaques successives (brute force attack) parvenir à casser les messages quelque soit la clé utilisée.

L'invention consiste à transmettre des messages de contrôle ECM contenant un mot de contrôle CW permettant l'accès à ces contenus vidéos ou audio, ces messages étant décryptés dans un module de sécurité. La décryption d'un tel message ne doit pas compromettre la sécurité du système d'accès conditionnel.

Ce but est atteint par une méthode de transmission et traitement d'un message de contrôle (ECM) par un module de sécurité relié à une unité multimédia destinée au traitement d'un contenu audio et/ou vidéo, ce message comprenant au moins un mot de contrôle (CW) permettant d'accéder audit contenu audio et/ou vidéo, et étant encrypté par une clé de transmission (TK), cette méthode comprenant les étapes suivantes:
- décryption par le module de sécurité du message de contrôle (ECM),
- extraction d'un moins un mot de contrôle (CW) du message décrypté,
- application du mot de contrôle (CW) à une table de substitution,
- transmission du mot de contrôle substitué à l'unité multimédia.

Le point central de cette solution est la table de substitution. Cette table est mémorisée dans le module de sécurité et pour accéder au mot de contrôle final, il est nécessaire de disposer d'une part du mot de contrôle du message de contrôle et d'autre part du contenu de la table de substitution.

Selon un mode de réalisation, cette table est optionnelle c'est-à-dire que seulement certains mots de contrôle sont substitués par la table.

L'invention sera mieux comprise grâce à la description détaillée qui va suivre et qui se réfère aux dessins annexés qui sont donnés à titre d'exemple nullement limitatif, à savoir:
- la figure 1 illustre un message de contrôle ECM,
- la figure 2 illustre la substitution à l'aide de la table.

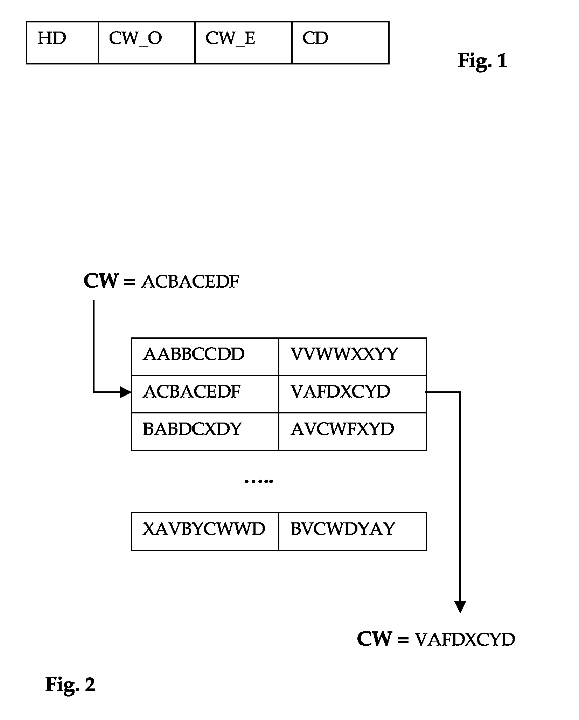

La figure 1 est une vue schématique d'un message de contrôle. Il se compose d'un en-tête HD, de deux mots de contrôle CW_O et CW_E qui correspondent au mot de contrôle courant et au prochain mot de contrôle. Une section de conditions CD est aussi présente définissant les conditions pour que les mots de contrôle soient exportés par le module de sécurité.

La table de substitution est illustrée à la figure 2. Le mot de contrôle CW traité est transmis à cette table pour être substitué par un autre mot de contrôle. Dans un premier exemple, la table ne contient pas toutes les possibilités des mots de contrôle mais une liste de mots de contrôle avec leurs valeurs de substitution. La première opération est de rechercher si le mot de contrôle traité est présent dans la table. Dans la négative, le mot de contrôle effectivement transmis par le module de sécurité es le même que celui contenu dans le message de contrôle.

Dans l'affirmative, la deuxième valeur de la table indique la nouvelle valeur du mot de contrôle. C'est ce dernier qui sera transmis par le module de sécurité à l'unité multimédia pour la réception du flux audio et/ou vidéo.

Selon une autre variante de l'invention, la table comprend toutes les variantes des mots de contrôle et le mot de contrôle traité sert de pointeur pour extraire le mot de contrôle de sortie. Ainsi cette table ne contient plus qu'une colonne au lieu de deux dans l'exemple précédant.

Il va de soi que la table peut être mise à jour par le centre de gestion gérant ces aspects de sécurité. Des messages de mise à jour de tables peuvent être transmis par ce centre de gestion par des messages d'administration EMM. Selon une variante de l'invention, le message d'administration EMM ne contient pas la nouvelle valeur de la table mais une valeur de modification du contenu de cette table. Ceci peut se faire sous la forme d'une simple opération XOR entre le contenu de la table et la valeur transmise par le message. Le résultat remplace l'ancienne valeur. De ce fait, à aucun moment le contenu de la table n'est présent dans un message transmis dans les airs.

Selon une variante de l'invention, le module de sécurité contient plusieurs tables, une table par service. Les données dans l'en-tête HD sont des données d'identification du contenu audio et/ou vidéo encrypté par ce mot de contrôle, et permettent de sélectionner la table appropriée pour l'opération de substitution.

Selon un mode de réalisation, le contenu de sortie de la table de substitution n'est pas utilisé directement comme mot de contrôle mais est utilisé pour une nouvelle opération sur le mot de contrôle traité. On peut utiliser le contenu de sortie de la table comme une clé pour encrypter (ou décrypter) le mot de contrôle traité. Toutes autres opérations mathématiques entre ces deux valeurs peut être réalisées telle que XOR, addition, multiplication, soustraction ou autre pour produire le mot de contrôle final.

Dans le centre de gestion, la préparation des messages de contrôle ECM suivent les mêmes règles. Généralement le mot de contrôle est issu d'un générateur pseudo-aléatoire. La sortie de ce générateur ne va pas directement au module d'encryption du flux audio et/ou vidéo mais passe par un module de substitution. Ce module est la fonction inverse de celle décrite ci-dessus.

Une fois le mot de contrôle final déterminé, il est transmis au module d'encryption alors que la sortie du générateur pseudo-aléatoire est transmise au module de formation des messages de contrôle ECM.

## Revendications

1. Méthode de transmission et traitement d'un message de contrôle (ECM) par un module de sécurité relié à une unité multimédia destinée au traitement d'un contenu audio et/ou vidéo, ce message comprenant au moins un mot de contrôle (CW) permettant d'accéder audit contenu audio et/ou vidéo, et étant encrypté par une clé de transmission (TK), cette méthode comprenant les étapes suivantes:
- décryption par le module de sécurité du message de contrôle (ECM),
- extraction d'au moins un mot de contrôle (CW) du message décrypté,
- application du mot de contrôle (CW) à une table de substitution,
- transmission du mot de contrôle substitué à l'unité multimédia.

2. Méthode selon la revendication 1, **caractérisée en ce que** le mot de contrôle extrait sert de pointeur dans la table de substitution et que le mot de contrôle substitué est la valeur pointée dans la table de substitution.

3. Méthode selon la revendication 1, **caractérisée en ce que** la table de substitution comprend une première liste de mots de contrôle d'entrée et une seconde liste de mots de contrôle de sortie, cette méthode comprenant les étapes suivantes:
- recherche dans la première liste la valeur correspondant au mot de contrôle extrait, si cette valeur existe,
- lecture dans la seconde liste de la valeur correspondante à la première valeur et transmission de la valeur de la seconde liste comme du mot de contrôle substitué pour l'unité multimédia,
- si la valeur n'existe pas, transmission du mot de contrôle extrait à l'unité multimédia.

4. Méthode selon les revendications 1 à 3, **caractérisée en ce qu'**elle comprend l'étape additionnelle suivante:
- mélanger arithmétiquement le mot de contrôle extrait et le mot de contrôle substitué pour déterminer la mot de contrôle transmis à l'unité multimédia.

5. Méthode selon les revendications 1 à 4, **caractérisée en ce que** le message de contrôle comprend des données d'identification (HD) permettant de sélectionner une table de substitution parmi une pluralité de tables de substitution.
